Europäisches Patentamt

European Patent Office

Office européen des brevets

(11) Publication number: **0 177 650**
A1

## (12) EUROPEAN PATENT APPLICATION

(21) Application number: **84307013.7**

(22) Date of filing: **12.10.84**

(51) Int. Cl.⁴: **F 16 L 27/10**

(43) Date of publication of application: **16.04.86**
**Bulletin 86/16**

(84) Designated Contracting States: **BE DE FR IT NL SE**

(71) Applicant: **Heat Transfer Technology Limited, Queens House Don Road, St. Helier Jersey Channel Islands (GB)**

(72) Inventor: **Tozer, Michael John Caswell, "Craigmillar", Stocksfield Northumberland (GB)**

(74) Representative: **Lee, Philip Graham et al, MARKS & CLERK 57/60 Lincoln's Inn Fields, London WC2A 3LS (GB)**

(54) Cylinder end seal.

(57) For sealing the joint between a pipe end (2) and a pipe or housing (3) into which it is to be inserted, a metal sleeve (1) has a part (a) which is secured, such as by welding, to the pipe end (2), a first annular corrugation (b) and a second annular corrugation (c) which is of greater diameter than the first annular corrugation (b) and resiliently deformable into sealing engagement with the pipe or housing (3).

0177650

-1-

## "CYLINDER END SEAL"

This invention relates to the formation of sealed joints between the ends of metal cylinders, for instance pipes or solid or tubular shafts and tubular or hollow housings concentric therewith.

Particularly in air flow pipe systems on aircraft engines, and other installations which in operation become heated, the pipes are subject to thermal expansion and contraction and allowance must be made for pipe movement accordingly. This is sometimes done by means of curved or bellows sections in the pipe but it is preferred not to use this expedient because it is not reliable in operation.

It has already been proposed also to equip a pipe end with external split ring fittings and insert it into a seal housing but these devices are unsatisfactory because they have an in-built leak path associated with the split; moreover they do not tolerate angular misalignment.

The present invention has accordingly been devised with the object of permitting a cylinder end joint which can tolerate linear displacement and angular misalignment under varying conditions without leakage.

Thus in accordance with the invention there is provided a cylinder end sealing sleeve made of metal and attachable co-axially over the outside of a cylinder end, the sleeve

-2-

comprising, successively along its length a constant diameter section which is in contact with the cylinder and secured thereto; a first radially outwardly projecting annular corrugation and a second radially outwardly projecting annular corrugation which is of increased diameter and axial length compared with the first one and intended to deform into sealing engagement with a housing or tube in which the cylinder end is to be sealingly inserted.

The sleeve is made of high quality sheet metal because it must operate at high temperatures and still retain its strength and elasticity. A preferred material is a high nickel content alloy known as NIMONIC 80A (BS HR 201) the sleeve being made in one piece with no weld in its construction.

The sealing sleeve can be attached to the cylinder by welding and can be coated with a wear-resistant lubricant to ensure long life.

The dimensions of the sealing sleeve are such as to achieve an interference fit and provide a satisfactory fluid - i.e. liquid or gas-seal even when the cylinder axis is at a slight angle to the axis of the seal housing.

The sealing part of the sleeve, that is to say the endmost corrugation, is so dimensional as to undergo deformation when inserted into a seal housing and create hoop stresses which react to alter the shape of the seal when undergoing angular departure from axial alignment to maintain a continuous sealing contact line.

-3-

The first corrugation being of a reduced diameter does not perform a sealing function. It acts however in the manner of a single convolution of a bellows and provides essential additional flexibility in the sealing sleeve by accommodating the movement which occurs on installation and allowing the sealing corrugation to maintain external contact with the external housing or tube.

A preferred embodiment of the sealing sleeve is illustrated in the accompanying drawing, in which:-

Fig. 1 is a central longitudinal section of the sealing sleeve shown _in situ_ on a pipe end;

Fig. 2 is a radial longitudinal section through the sleeve; and

Fig. 3 is a longitudinal radial sketch view of the sleeve;

Fig. 4 is a longitudinal half section to illustrate the sleeve in an operative position within a housing.

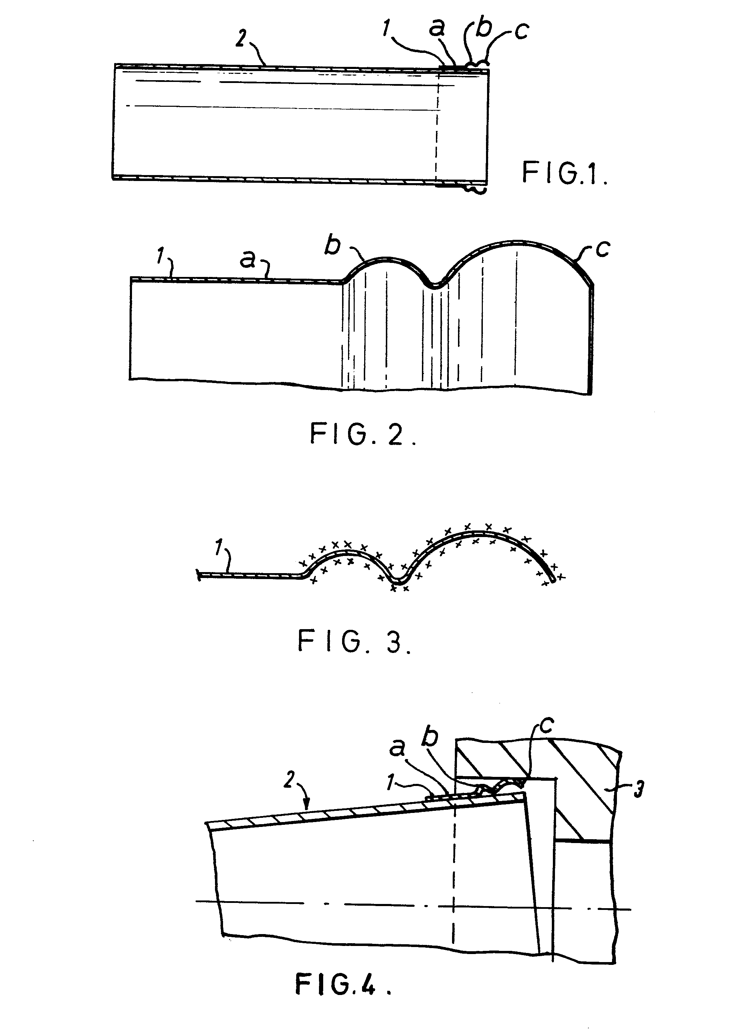

The sleeve 1 shown in the drawing is intended for fitting to the end of a metal pipe 2. It is made of NIMONIC 80A nickel alloy to BS HR 201 and has been fully age hardened after final forming by heat treatment in vacuum for 4 hours at $750^{o}C \pm 10^{o}C$. The areas xxxx indicated in Fig. 3 are silver plated and the whole of the sleeve is polished.

The sleeve, which is of uniform material thickness from end to end, successively comprises, towards the extremity of the pipe end, a cylindrical constant diameter part $a$ which

-4-

is attached to the tube 2 by welding, a first radially outwardly projecting arcuate corrugation b and an adjoining larger radius corrugation c which is of greater diameter and axial length than the corrugation b.

Referring now to Fig. 4, where the pipe end with attached sleeve 1 has been pushed in the direction indicated by arrow 'A' into the housing 3, it can be seen that the leading corrugation c has undergone deformation and, being resilient, is tightly engaging the inside wall surface of the housing 3 even though, as illustrated, the axis of the pipe 2 is inclined relative to the axis of the housing 3.

Typical dimensions of the embodiment which has been described and shown are as follows:-

Outside Diameter of tube 2: 28mm

Sleeve 1 thickness : .30mm

Sleeve 1 inside diameter : $28.01mm \, {}^{+.05}_{-.00}$

Sleeve 1 overall length : 11.09mm

Sleeve 1 part a length : 5.25mm

Sleeve 1 part b length : $1.9 \pm .25$

Sleeve 1 part c length : $3.56 \pm .25$

Sleeve 1 part b maximum diameter $29.6 \pm .13$

Sleeve 1 part b minimum diameter $28.45 \pm .13$

Sleeve 1 part c maximum diameter $30.61 \pm .05$

Sleeve 1 part c minimum diameter $28.32 \pm .13$

All these dimensions are prior to silver plating to a thickness of .025 to .050 mm.

A modified cylinder end sealing sleeve in accordance with the invention could be used to seal the joint between the annular body of a valve or gearbox and so forth and the end of a pipe or shaft extending therethrough where the body and/or the pipe or shaft contains a medium under some pressure such as oil, air or gas. The sleeve would then have at its constant diameter end an annular radially outwardly directed end flange formed with one or more axially projecting annular corrugations and this flange would be compressed between the body end and a retaining plate by tightening bolts which extend through the retaining plate into the body end. The resilient corrugation of the sleeve would then apply radially inwardly directed pressure against the pipe or shaft end and provide an adequate seal even in the event of some axial misalignment of the pipe or shaft relative to the body.

-6-

CLAIMS

1. A cylinder end sealing sleeve (1) made of metal and attachable co-axially over the outside of a cylinder (2) characterised in that it comprises successively.along its length a constant diameter part (a) intended to contact the cylinder wall (2) and to be secured thereto; a first radially outwardly projecting annular corrugation (b) and a second radially outwardly projecting annular corrugation (c) which is of increased diameter and axial length compared with the first corrugation (b) and intended to deform resiliently into sealing engagement with a housing (3) or tube concentric therewith.

2. A pipe end sealing sleeve (1) made of metal and attachable co-axially over the outside of a pipe (2) characterised in that it comprises sucessively, in the direction of the extremity of the pipe (2); a constant diameter part (a) intended to contact the pipe end and to be secured thereto; a first radially outwardly projecting annular corrugation (b) and a second radially outwardly projecting annular corrugation (c) which is of increased diameter and axial length compared with the first corrugation (b) and intended to deform resiliently into sealing engagement with a housing (3) or pipe in which the pipe end is to be sealingly inserted.

3. A pipe end sealing sleeve according to claim 2, in combination with a pipe end (2) to which it is secured and a pipe or housing (3) in which the pipe end and the sleeve (1) are sealingly received.

4. A cylinder end sealing sleeve according to Claim 1 and having at its constant diameter end an annular radially outwardly directed end flange formed with one or more axially projecting annular corrugations.

FIG.1.

FIG.2.

FIG.3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 054 306 (SADOF AND HALLING) * Claim 1; column 3, lines 42-48; figures 1-2 * | 1-4 | F 16 L 27/10 |
| A | GB-A-1 136 698 (PICKUP AND SONS LTD.) * Claim 1; figures 1-2 * | 1-4 | |
| A | US-A-2 206 414 (POLLAK MANUFACTURING CO.) * Figure 1; page 1, lines 41-45 * | 1-4 | |
| A | FR-A-2 419 393 (WESTAFLEX-FRANCE) * Figure 4 * | 1-4 | |

TECHNICAL FIELDS SEARCHED (Int. Cl.4)

F 16 L 27/00
F 16 L 51/00

The present search report has been drawn up for all claims

| Place of search | Date of completion of the search | Examiner |
|---|---|---|
| THE HAGUE | 09-06-1985 | NARMINIO A. |